# EUROPEAN PATENT APPLICATION

(11) **EP 4 507 337 A1**
(43) Date of publication of application: **12.02.2025**
(21) Application number: 23190804.7
(22) Date of filing: 10.08.2023
(51) Int. Cl.: H04W 4/02, G01S 5/00

(54) **LOCATION MANAGEMENT APPARATUS, RADIO TERMINAL, AND METHODS TO OPERATE THE LOCATION MANAGEMENT APPARATUS AND THE RADIO TERMINAL**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

A location management apparatus (LMF#1) is configured to perform at least: receiving (322), via at least one radio channel, or determining (324) at least one first motion information (MO#1) characterizing a motion of a first radio terminal (UE#1); receiving (318), via the at least one radio channel, at least one second motion information (MO#2) characterizing a motion of a second radio terminal (UE#2); receiving (318), via the at least one radio channel, at least one measurement (ME) and an associated point in time (t_ME) when the at least one measurement (ME) was performed, wherein the at least one measurement (ME) was performed by the second apparatus (UE#2), and wherein the at least one measurement (ME) characterizes a relationship between the first radio terminal (UE#1) and the second radio terminal (UE#2) in time and/or space; and determining (330) at least one delay information (DI) representing at least partly a time span between the associated point in time (t_ME) when the at least one measurement (ME) was performed and a specified point in time associated with a provision of a position information (PI) indicating a position of the first radio terminal (UE#1).

## Description

### Prior Art

The use of sidelink positioning in the context of V2X is a promising technology in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication.

### Disclosure of the invention

The problems of the prior art are solved by a location management apparatus, a radio terminal, and method to operate the location management apparatus and the radio terminal according to the independent claims.

A first aspect of the description is directed to the following subject matter:
A location management apparatus comprising at least one processor; at least one memory including computer program code; and at least one radio communication module; the at least one processor the at least one memory, the at least one computer program code, and the at least one radio communications module cause the location management apparatus to perform at least: receiving, via at least one radio channel, or determining at least one first motion information characterizing a motion of a first radio terminal; receiving, via the at least one radio channel, at least one second motion information characterizing a motion of a second radio terminal; receiving, via the at least one radio channel, at least one measurement and an associated point in time when the at least one measurement was performed, wherein the at least one measurement was performed by the second apparatus, and wherein the at least one measurement characterizes a relationship between the first radio terminal and the second radio terminal in time and/or space; and determining at least one delay information representing at least partly a time span between the associated point in time when the at least one measurement was performed and a specified point in time associated with a provision of a position information indicating a position of the first radio terminal.

In the case of SL positioning with multiple anchor UEs like the at least second radio terminal, the latency in the measurement and reporting is increased since the Location Management Function, LM F#1, has to wait for the reports in order to initiate the estimation or determination of the positioning information. When it comes to UEs or radio terminals with high mobility, such as cars, the aforementioned latencies introduce an additional challenge: the UEs moves significantly during the measurements, introducing high inaccuracies in the position estimation. These issues arising from the latencies and the mobility of the target and anchor UEs or radio terminals are reduced by advantageously leveraging the knowledge of the relationship between the first radio terminal and the second radio terminal in time and/or space, that includes heading / driving direction, velocities, and the associated time of measurement in the of the associated point in time.

The knowledge of the latency or delay is especially advantageous when the solution is implemented in the backhaul network. The determination of the position information then takes into account the mobility and the latencies induced by movement and measurement gathering.

In other words, the at least one delay information enables to determine a position of the moving first radio terminal by compensating the time for measurement conduction, reporting, gathering and other possible delay sources like an overcrowded radio domain with other high priority traffic. Therefore, the provided method advantageously increases the confidence level of the position information.

An advantageous example is characterized in the following: determining the position information indicating the position of the first apparatus at a specified point in time based at least on: the at least one first motion information, the at least one second motion information, the at least one measurement, the associated point in time, the delay information, and the specified point in time.

The location management apparatus, for example a radio terminal, performing the position estimation accounts for the mobility of the target and anchor UEs as well as the measurement and reporting delays in order to compensate the displacement during measurement and reporting time.

According to another advantageous example, there is provided a transmitting, via the at least one radio channel, of the determined position information.

An advantageous example is characterized in that the apparatus is further configured to perform: transmitting, via the at least one radio channel, a measurement result that comprises the at least one first motion information, the at least one second motion information, the at least one measurement, the associated point in time, and the at least one delay information.

The measurement result advantageously enables the receiving entity to precisely determine the position information.

An advantageous example is characterized in that the at least one second motion information characterizes the motion of the at least one second radio terminal at the point in time associated with the measurement.

Moreover, this enables a further reduction in communication overhead as the point in time associated with the second motion information could be omitted.

An advantageous example is characterized in that the apparatus is further configured to perform: receiving a measurement report that comprises the second motion information, the at least one measurement and the associated point in time.

An advantageous example is characterized in that the apparatus is further configured to perform: receiving, via the at least one radio channel, a positioning request; transmitting, via the at least one radio channel, based on the reception of the positioning request, a measurement request; wherein the at least one measurement, especially also the first and second motion information, is received as a response to the transmitted measurement request.

Advantageously, the procedure is initiated by the positioning request.

An advantageous example is characterized in that the apparatus is further configured to perform: receiving, via the at least one radio channel, a plurality of measurements and an associated points in time when the respective measurements were performed, each of the plurality of measurements characterizes a relationship between the first radio terminal and a respective one of second radio terminals in time and/or space.

Advantageously, the plurality of measurements enable to obtain a more precise position information regarding the position of the first radio terminal.

An advantageous example is characterized in that the associated point in time linked to the delay information is the point in time linked with the first received one of measurements associated with the positioning request.

Advantageously, the delay information spans the delay since the first received measurement. Therefore, all measurements can be considered when determining the position information.

A second aspect of the description is directed to a method comprising: receiving, via at least one radio channel, or determining at least one first motion information characterizing a motion of a first radio terminal; receiving, via the at least one radio channel, at least one second motion information characterizing a motion of a second radio terminal; receiving, via the at least one radio channel, at least one measurement and an associated point in time when the at least one measurement was performed, wherein the at least one measurement was performed by the second apparatus, and wherein the at least one measurement characterizes a relationship between the first radio terminal and the second radio terminal in time and/or space; and determining at least one delay information representing at least partly a time span between the associated point in time when the at least one measurement was performed and a specified point in time associated with a provision of a position information indicating a position of the first radio terminal.

A third aspect of the description is directed to the following subject matter: A radio terminal comprising at least one processor; at least one memory including computer program code; and at least one radio communication module; the at least one processor the at least one memory, the at least one computer program code, and the at least one radio communications module cause the radio terminal to perform at least: receiving, at least partly via the at least one radio channel, a measurement result that comprises at least one first motion information characterizing a motion of a first radio terminal, at least one second motion information characterizing a motion of a second radio terminal, at least one measurement and an associated point in time, and at least one delay information, wherein the associated point in time indicates when the at least one measurement was performed, wherein the at least one measurement was performed by the second apparatus, and wherein the at least one measurement characterizes a relationship between the first radio terminal and the second radio terminal in time and/or space; and determining a position information indicating a position of the first apparatus at a specified point in time based at least on: the at least one first motion information, the at least one second motion information, the at least one measurement, the associated point in time, and the specified point in time.

The radio terminal performing the position estimation accounts for the mobility of the target and anchor UEs as well as the received or determined measurement and received or determined reporting delays in order to compensate the displacement during measurement and reporting time.

A fourth aspect of the description is directed to the following subject matter: A method comprising receiving, at least partly via the at least one radio channel, a measurement result that comprises at least one first motion information characterizing a motion of a first radio terminal, at least one second motion information characterizing a motion of a second radio terminal, at least one measurement and an associated point in time, and at least one delay information, wherein the associated point in time indicates when the at least one measurement was performed, wherein the at least one measurement was performed by the second apparatus, and wherein the at least one measurement characterizes a relationship between the first radio terminal and the second radio terminal in time and/or space; and determining a position information indicating a position of the first apparatus at a specified point in time based at least on: the at least one first motion information, the at least one second motion information, the at least one measurement, the associated point in time, and the specified point in time.

An aspect of the description is directed to a use of the methods according the above-mentioned aspects of the description.

According to a further aspect of the invention there is provided a computer program comprising instructions to cause the location management apparatus, or its embodiments, to execute the steps of the above-mentioned method to operate the location management apparatus and to determine at least one delay information respectively, or its embodiments, and/or to cause the radio terminal to execute the steps of the above-mentioned method to operate the radio terminal and to determine a position information respectively, or its embodiments. Moreover, there is provided a computer-readable having stored thereon the above-mentioned computer program.
- Figure 1: depicts a first part of a method to operate a radio communications network in a schematic sequence diagram;
- Figures 2 and 3: each depict a second part of the method in a schematic sequence diagram;
- Figures 4 to 6: each depict examples of applying the method to real world scenarios; and
- Figure 7: depicts a location management apparatus and two radio terminals in a schematic block diagram.

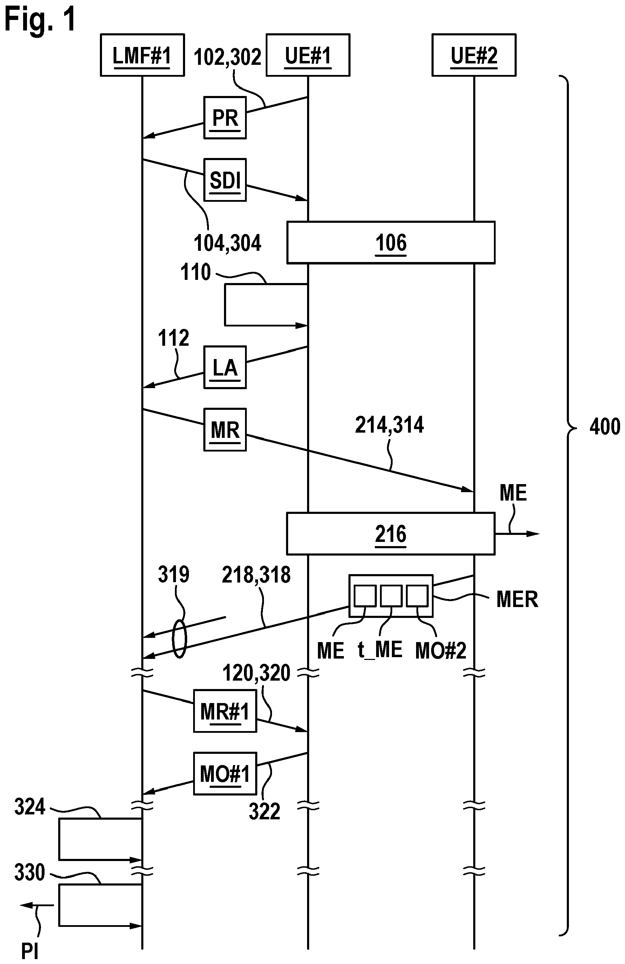

Figure 1 depicts a part of a method to obtain a position information indicating a position of a first radio terminal UE#1.

UE#1 transmits 102 a positioning request PR via at least one radio channel, the positioning request PR being received 302, via the at least one radio channel, by a location management apparatus LMF#1 that realizes a location management function, LMF. The positioning requests PR indicates that the transmitting entity, here UE#1, wants to obtain the position information of a certain radio terminal, here UE#1. For simplicity reasons, the requesting entity is equal to the entity for which the location information is determined. Of course, in many applications, the requesting entity and the entity for which the location information is determined fall apart.

Upon receiving the request LMF#1 transmits 304 via the at least one radio channel a sidelink discovery instruction SDI, that is received 104 by UE#1. Upon receiving 104 the sidelink discovery instruction SDI, UE#1 performs 106 sidelink discovery and determines 110 a list of UEs comprising at least a second radio terminal UE#2 d. In other words, the radio terminal UE#2 is discovered by UE#1 as being a candidate anchor UE.

In the example shown, UE#1 selects 110 from the discovery list, a list LA comprising at least one or a plurality of anchor UEs for serving the positioning request PR. The list LA is transmitted 112 by UE#1 via the at least one radio channel and is received by LMF#1.

In an embodiment not shown, the discovery list is transmitted to LMF#1 for LMF#1 to select the anchor UEs in form of the list LA.

Based on the list LA, LMF#1 transmits 314, via the at least one radio channel, a measurement request MR. Summed up, the transmission 314 is initiated based on the reception of the positioning request PR.

The measurement request MR is received 214 by UE#2, wherein UE#2 performs 216 at least one measurement ME with respect to UE#1. The at least one measurement ME is conducted at a point in time t_ME that is also determined. The point in time t_ME is therefore referred to as the point in time associated with the at least one measurement.

For example, the conduction of the at least one measurement comprises: UE#2 performs a round trip time measurement, wherein UE#2 sends a signal to UE#1 requesting an immediate answer from UE#1. The time span between the transmission of the signal and the reception of the answer represents the measured round-trip time.

For example, the conduction of the at least one measurement comprises: UE#2 performs an AOA measurement with respect to UE#1. The AOA, angle of arrival, measurement comprises a determination of a direction from which a received radio signal originally emanated.

Of course, the measurement request MR is transmitted preferably to a plurality of UEs like UE#2. For simplicity reasons, only UE#2 is depicted here as an anchor UE.

UE#2 transmits 218 a measurement report MER, via the at least one radio channel, towards LMF#1. LMF#1 receives 318 the measurement report. The measurement report MER comprises second motion information MP#2, the at least one measurement ME and the associated point in time t_ME. In other words, LMF#1 receives 318, via the at least one radio channel, at least one second motion information MO#2 characterizing a motion of a second radio terminal UE#2. LMF#1 receives 318, via the at least one radio channel, at least one measurement ME and an associated point in time t_ME when the at least one measurement ME was performed, wherein the at least one measurement ME was performed by the second apparatus UE#2, and wherein the at least one measurement ME characterizes a relationship between the first radio terminal UE#1 and the second radio terminal UE#2 in time and/or space.

The measurement report ME originating from UE#2 also comprises the motion information MO#2 that indicates whether and how UE#2 is moving. The motion information MO#2 can be relative and not absolute to a common reference. For example, the motion information MO#2 comprises a speed and heading at the time of conducting the measurement ME.

Tat least one second motion information MO#2 characterizes the motion of UE#2 at the point in time associated with the measurement ME.

As indicated, there can be more than one anchor UE like UE#2. Accordingly, LMF#1 receives 319, via the at least one radio channel, a plurality of measurements and an associated points in time when the respective measurement was performed, wherein each of the plurality of measurements characterizes a relationship between the first radio terminal and a respective one of second radio terminals in time and/or space.

According to a first embodiment, LMF#1 transmits 320 a motion request MR#1 via the at least one radio channel to UE#1. UE#1, upon receiving 120 the motion request MR#1 determines first motion information MO#1, and transmits 122 the motion information MO#1 towards LMF#1. LMF#1 received 322 the first motion information MO#1.

According to a second embodiment, LMF#1 determines 324 the first motion information MO#1 on its own, for example by means of estimation based at least on the at least one measurement ME.

The at least one measurement ME, especially also the first and second motion information MOI#1, MO#2, is received by LMF#1 as a response to the transmitted measurement request MR.

LMF#1 determines 330 at least one delay information DI representing at least partly a time span between the associated point in time t_ME when the at least one measurement ME was performed and a specified point in time associated with a future provision of a position information PI indicating a position of the first radio terminal UE#1.

The motion information MO#1. MO#2 associated with the first or second apparatus comprises relative information like speed, direction, etc. If the speed is zero, the motion information also conveys this information. In other words, the motion information does not imply that the associated apparatus actually moves.

The associated point in time t_ME linked to the delay information DI is the point in time linked with the first received one of measurements ME associated with the positioning request PR.

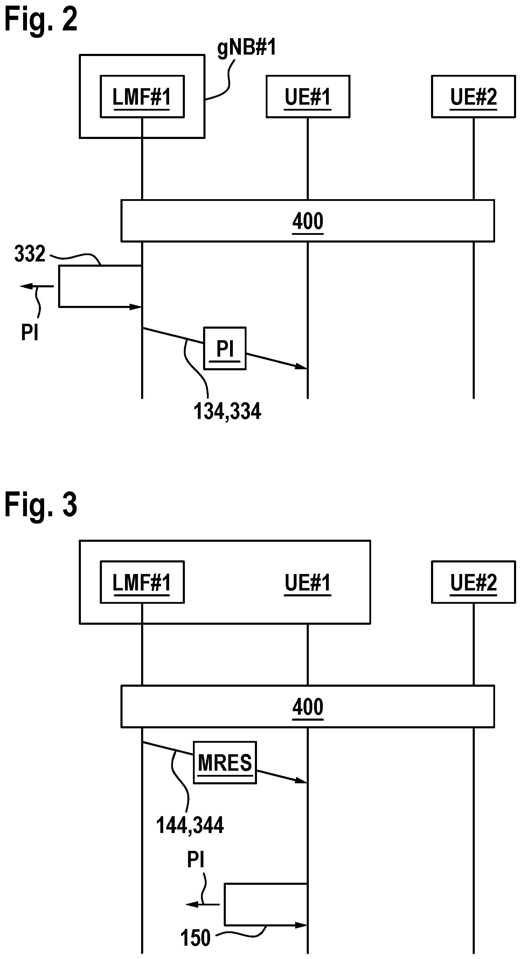

Figure 2 depicts a first mode of operation continuing the procedure of figure 1. LMF#1 is part of a backhaul network of a radio node gNB#1 that provides a radio cell for at least one of the radio terminals UE#1, UE#2. According to a further example, gNB#1 is not a radio access node but a radio terminal.

LMF#1 determines 332 the position information PI indicating the position of the first apparatus UE#1 at a specified point in time based at least on: the at least one first motion information MO#1, the at least one second motion information MO#2, the at least one measurement ME, the associated point in time t_ME, the delay information DI, and the specified point in time.

LMF#1 transmits 334, via the at least one radio channel, the determined position information PI. The determined position information PI is received 134 by UE#1. Therefore, requesting entity or first radio terminal UE#1 receives 134 an estimation of the position of the target UE at the desired time, for example the current point in time.

The specified point in time for determining the positioning information could be the expected time of arrival of the position information PI at UE#2, a point in time when the calculation is expected to be finished, or even a requested point in time transmitted via the position request PR.

The determination 332 therefore includes that LMF#1 uses the time and mobility information related to the measurements ME to estimate the displacement of the target UE#1. LMF#1 projects the position of the target UE#1 at a future time point corresponding to the current time plus the estimated reporting delay indicated by the delay information DI.

Figure 3 depicts a second mode of operation continuing the procedure of figure 1. In the second mode, the location management apparatus LMF#1 is part of UE#1. In other words, according to the second mode, the position determination is UE-managed. Of course, both modes can be executed in the same radio communications network.

LMF#1 transmits 344, internally or, if the UE with the LMF and the UE sending the position request fall apart, via the at least one radio channel, the measurement result MRES that comprises the at least one first motion information MO#1, the at least one second motion information MO#2, the at least one measurement ME, the associated point in time t_ME, and the at least one delay information DI.

UE#1 determines 150 the position information PI indicating the position of the first apparatus UE#1 at a specified point in time based at least on: the at least one first motion information MO#1, the at least one second motion information MO#2, the at least one measurement ME, the associated point in time t_ME, and the delay information DI, and the specified point in time.

In other words, LMF#1 provides, to the requesting UE#1, here to itself, measurement reports encompassing the time and mobility information together with the positioning measurements. The requesting UE#1 uses the time and mobility information related to the measurements to estimate the current position of the target UE accounting for all displacement during the measurements and reporting.

The advantage of the second mode of operation is that there is no need to estimate the measurement and reporting delays by a different entity as they can be measured by the requesting UE.

The determination of the position information PI in the examples above can depend on an estimator function for the positions of the radio terminals. Therefore, vehicles to which the radio terminals or UEs are bound are tracked using an advanced filter.

In another embodiment, the LMF role is performed by a server UE, preferably the target UE, in or out of coverage.

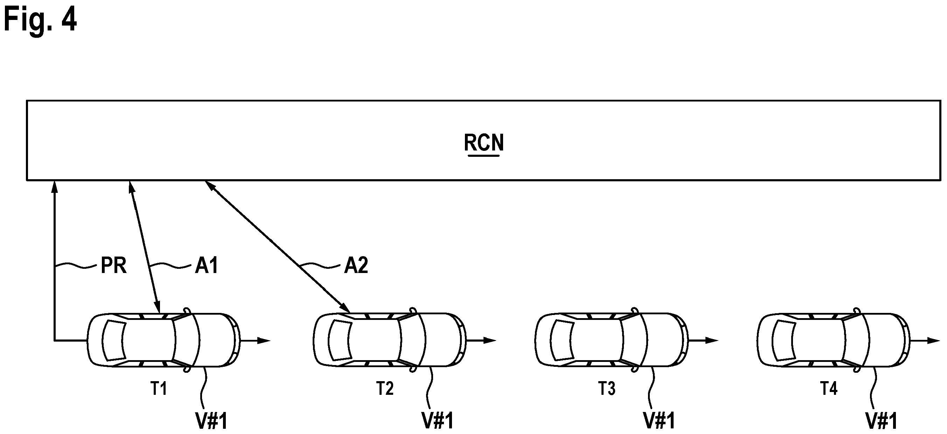

Figure 4 depicts an example of UE#1 being part of vehicle V#1 requesting to determine its own position with the help of the remaining radio communications network, RCN, of which UE#1 is part of. At point in time T1, UE#1 transmits the positioning request PR to RCN. According to arrows A1, A2, measurements are conducted at several time instances T2, T3 and location information is transmitted towards UE#1 of vehicle V#1. Therefore, UE#1 is able to determine its own position at a further time instance T4.

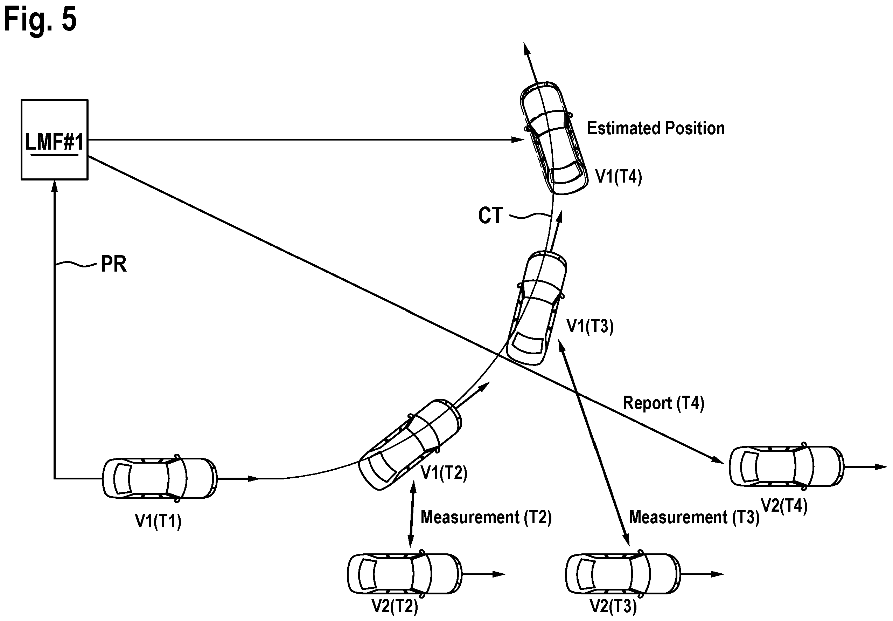

Figure 5 depicts a further example of advanced position extrapolation where the target UE#1 of vehicle V#1 moves during the multiple measurements at time instances T2, T3 on a curved trajectory CT. The anchor UE#2 of vehicle V#2 provides the measurement report MER at time instance T3, so that the position estimation at time instance T4 is possible. The reports are gathered by the LMF#1 and the position estimation is done by the requesting UE#1, which is here the target UE.

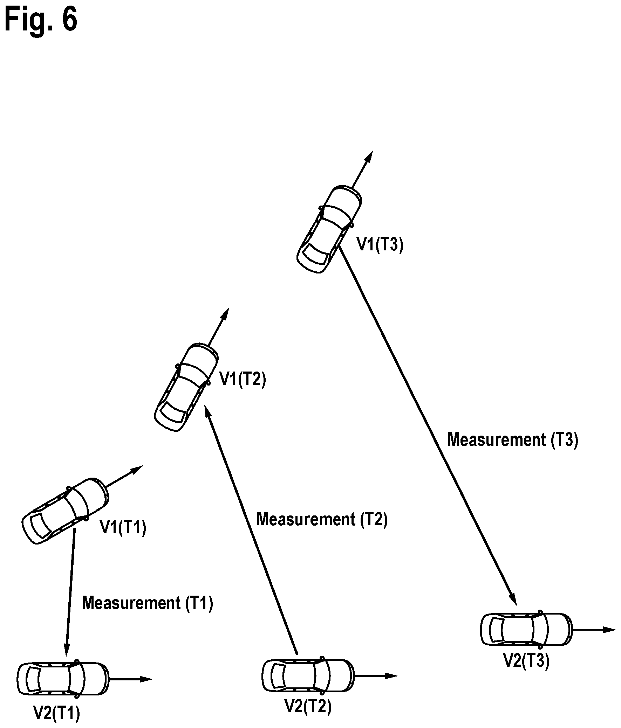

Figure 6 depicts a further example of displacement during the measurement and reporting itself. As can be seen, the speed, velocity and time of measurement have to be taken into account for the projection of the position at the time of final reporting.

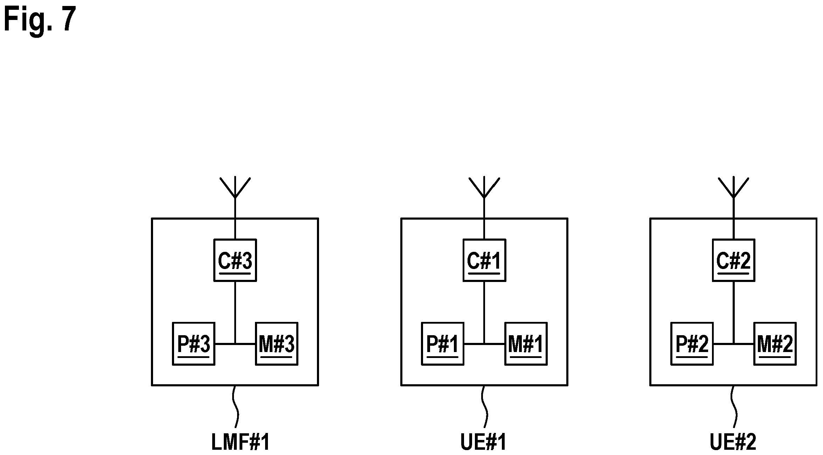

Figure 7 depicts in a schematic block diagram, that the location management apparatus LMF#1, the first and second radio terminal UE#1, UE#2, each comprise at least one processor P#1, P#2, P#3, at least one non-transitory memory M#1, M#2, M#3 including computer program code, and at least one radio communication module C#1, C#2, C#3 that comprises a respective antenna.

## Claims

1. A location management apparatus (LMF#1) comprising at least one processor; at least one memory including computer program code; and at least one radio communication module; the at least one processor, the at least one memory, the at least one computer program code, and the at least one radio communications module cause the location management apparatus (LMF#1) to perform at least:
receiving (322), via at least one radio channel, or determining (324) at least one first motion information (MO#1) characterizing a motion of a first radio terminal (UE#1);
receiving (318), via the at least one radio channel, at least one second motion information (MO#2) characterizing a motion of a second radio terminal (UE#2);
receiving (318), via the at least one radio channel, at least one measurement (ME) and an associated point in time (t_ME) when the at least one measurement (ME) was performed, wherein the at least one measurement (ME) was performed by the second apparatus (UE#2), and wherein the at least one measurement (ME) characterizes a relationship between the first radio terminal (UE#1) and the second radio terminal (UE#2) in time and/or space;
determining (330) at least one delay information (DI) representing at least partly a time span between the associated point in time (t_ME) when the at least one measurement (ME) was performed and a specified point in time associated with a provision of a position information (PI) indicating a position of the first radio terminal (UE#1).

2. The location management apparatus (LMF#1) according to claim 1 further configured to perform:
determining (150, 332) the position information (PI) indicating the position of the first apparatus (UE#1) at a specified point in time based at least on: the at least one first motion information (MO#1), the at least one second motion information (MO#2), the at least one measurement (ME), the associated point in time (t_ME), the delay information (DI) and based on the specified point in time.

3. The location management apparatus (LMF#1) according to claim 2 further configured to perform:
transmitting (334), via the at least one radio channel, the determined position information (PI).

4. The location management apparatus (LMF#1) according to one of the preceding claims, further configured to perform:
transmitting (344), via the at least one radio channel, a measurement result (MRES) that comprises the at least one first motion information (MO#1), the at least one second motion information (MO#2), the at least one measurement (ME), the associated point in time (t_ME), and the at least one delay information (DI).

5. The location management apparatus (LMF#1) according to one of the preceding claims, wherein the at least one second motion information (MO#2) characterizes the motion of the at least one second radio terminal (UE#2) at the point in time associated with the measurement (ME).

6. The location management apparatus (LMF#1) according to one of the preceding claims, further configured to perform:
receiving (318) a measurement report (MER) that comprises the second motion information (MP#2), the at least one measurement (ME) and the associated point in time (t_ME).

7. The location management apparatus (LMF#1) according to one of the preceding claims, further configured to perform:
receiving (302), via the at least one radio channel, a positioning request (PR);
transmitting (314), via the at least one radio channel, based on the reception of the positioning request (PR), a measurement request (MR);
wherein the at least one measurement (ME), especially also the first and second motion information (MOI#1, MO#2), is received as a response to the transmitted measurement request (MR).

8. The location management apparatus (LMF#1) according to claim 7, further configured to perform:
receiving (319), via the at least one radio channel, a plurality of measurements and an associated points in time when the respective measurements were performed, wherein each of the plurality of measurements characterizes a relationship between the first radio terminal and a respective one of second radio terminals in time and/or space.

9. The apparatus (LMF#1) according to claims 7 and 8, wherein the associated point in time (t_ME) linked to the delay information (DI) is the point in time linked with the first received one of measurements associated with the positioning request (PR).

10. A method comprising:
receiving (322), via at least one radio channel, or determining (324) at least one first motion information (MO#1) characterizing a motion of a first radio terminal (UE#1);
receiving (318), via the at least one radio channel, at least one second motion information (MO#2) characterizing a motion of a second radio terminal (UE#2);
receiving (318), via the at least one radio channel, at least one measurement (ME) and an associated point in time (t_ME) when the at least one measurement (ME) was performed, wherein the at least one measurement (ME) was performed by the second apparatus (UE#2), and wherein the at least one measurement (ME) characterizes a relationship between the first radio terminal (UE#1) and the second radio terminal (UE#2) in time and/or space; and
determining (330) at least one delay information (DI) representing at least partly a time span between the associated point in time (t_ME) when the at least one measurement (ME) was performed and a specified point in time associated with a provision of a position information (PI) indicating a position of the first radio terminal (UE#1).

11. A radio terminal comprising at least one processor; at least one memory including computer program code; and at least one radio communication module; the at least one processor, the at least one memory, the at least one computer program code, and the at least one radio communications module cause the radio terminal to perform at least:
receiving (144), at least partly via the at least one radio channel, a measurement result (MRES) that comprises at least one first motion information (MO#1) characterizing a motion of a first radio terminal (UE#1), at least one second motion information (MO#2) characterizing a motion of a second radio terminal (UE#2), at least one measurement (ME) and an associated point in time (t_ME), and at least one delay information (DI), wherein the associated point in time (t_ME) indicates when the at least one measurement (ME) was performed, wherein the at least one measurement (ME) was performed by the second apparatus (UE#2), and wherein the at least one measurement (ME) characterizes a relationship between the first radio terminal (UE#1) and the second radio terminal (UE#2) in time and/or space; and
determining (150) a position information (PI) indicating a position of the first apparatus (UE#1) at a specified point in time based at least on: the at least one first motion information (MO#1), the at least one second motion information (MO#2), the at least one measurement (ME), the associated point in time (t_ME), the at least one delay information (DI) and the specified point in time.

12. A method comprising:
receiving (144), at least partly via the at least one radio channel, a measurement result (MRES) that comprises at least one first motion information (MO#1) characterizing a motion of a first radio terminal (UE#1), at least one second motion information (MO#2) characterizing a motion of a second radio terminal (UE#2), at least one measurement (ME) and an associated point in time (t_ME), and at least one delay information (DI), wherein the associated point in time (t_ME) indicates when the at least one measurement (ME) was performed, wherein the at least one measurement (ME) was performed by the second apparatus (UE#2), and wherein the at least one measurement (ME) characterizes a relationship between the first radio terminal (UE#1) and the second radio terminal (UE#2) in time and/or space; and
determining (150) a position information (PI) indicating a position of the first apparatus (UE#1) at a specified point in time based at least on: the at least one first motion information (MO#1), the at least one second motion information (MO#2), the at least one measurement (ME), the associated point in time (t_ME), the at least one delay information (DI) and the specified point in time.

13. A use of the method according to claims 10 or 12.
